# EUROPEAN PATENT APPLICATION

(11) **EP 1 590 999 A1**
(43) Date of publication of application: **02.11.2005**
(21) Application number: 05103465.0
(22) Date of filing: 27.04.2005
(51) Int. Cl.: A01B 15/16, A01B 23/06, A01B 29/04, A01B 15/18, A01B 35/24

(54) **Scraper for agricultural implement**

(30) Priority: 28.04.2004 SE 0401121
(71) Applicant: Väderstad-Verken AB, 590 21 Väderstad (SE)
(72) Inventor: Nyman, Lennart, 58929 Linköping (SE); Fimmerstad, Per, 64792 Mariefred (SE); Stark, Magnus, 58727 Linköping (SE)
(74) Representative: Stein, Jan Anders Lennart

(57) **Abstract**

Scraper for agricultural implements comprising a fastening portion (18) and an end portion (22) connected with a middle portion (20). The middle portion comprises a first part (24) flexible in a first direction (A) and mainly rigid in a second direction (B) essentially perpendicular to the first direction (A) and a second part (26) flexible in the second direction (B) and mainly rigid in the first direction (A). The end portion (22) comprises a work tool (38).

## Description

The invention refers to a scraper for agricultural implements according to the ingress of Claim 1, and an agricultural implement according to the ingress of Claim 5.

### Background of the invention

Tractor-drawn agricultural implements for soil tillage are often provided with one or several roller packages. The roller package often consists of a number of roller wheels pressed together in axial direction and arranged at a common axle. The agricultural implement in itself can then also comprise several soil tilling tools such as discs or tines.

During work in extremely wet and clayey conditions there is a risk of large amounts of soil, stones and plant parts adhering to the roller wheels. This leads to impaired function and in certain cases with large amounts of soil to the rotation of the roller wheels being completely impeded.

To find a remedy for this problem it is common to arrange a scraper with the task of removing the soil from the roller wheels. It has however been found to be difficult to achieve scrapers with sufficiently good flexibility, function and durability in difficult conditions. Furthermore during reversing of the implement the scrapers can prevent soil removal.

### Objects of the invention

The object of the invention is to achieve a scraper for agricultural implements where the abovementioned disadvantages are avoided. Furthermore the scraper must provide good function and durability and give good work results. In addition the scraper should be easy and cheap to manufacture and mount.

The invention also has the object of achieving an agricultural implement provided with scrapers according to the above.

### Summary of the invention

The first object of the invention above is solved through a scraper according to Claim 1. Here a middle portion of the scraper is provided with two parts where one is flexible in a first direction and rigid in a second perpendicular direction and the other is in contrast rigid in the first direction and flexible in the other. This hereby allows for a robust scraper with good durability where the one part of the middle portion can allow flexion in the radial direction of the roller wheels and the other part in the axial direction of the roller wheels. The scraper thereby has good potential to follow the contours of the roller wheels even when it is subjected to wear and vibrations. Furthermore the second part that is flexible in axial can be made somewhat weaker in this direction and thereby also thinner which gives good throughflow of soil during reversing of the implement.

Claim 2 describes an advantageous detail embodiment where the work tool can be exchanged. This is of economic interest since the actual work tool comprises the part that is most subjected to wear which can thereby be optimised in terms of materials and easily replaced without replacement of the entire scraper being required.

Through a scraper according to Claim 3 where the middle part is comprised of a plate part a device that is cheap, simple and robust is obtained. This hereby also makes it possible to allow the second part of the middle portion to be arranged with the normal direction of its broad side parallel to the axial direction of the roller package which gives good throughflow of soil during reversing of the implement.

Claim 4 comprises a further refinement where the plate part comprises the entire main component of the scraper which provides a cost-effective and manufacturing-effective construction.

The second object of the invention above is solved by an agricultural implement according to Claim 5 provided with the previously described scrapers and their concomitant advantages.

By an agricultural implement according to Claim 6 the second part of the middle portion is arranged with the normal direction of its broad side parallel to the axial direction of the roller package which gives good throughflow of soil during reversing of the implement.

Finally Claim 7 describes a further refinement where the throughflow becomes greatest close to the work tool which is desirable since the greatest congestion otherwise occurs there.

The further characteristics and advantages of the invention are described more closely below with the help of an embodiment example and drawings related thereto.

### Drawing summary

Figure 1 illustrates a tractor-drawn soil tillage implement.
Figure 2 is an expanded view of a part of the implement shown in figure 1 provided with a scraper.
Figure 3 illustrates the scraper shown in figure 2.

### Description of an embodiment example

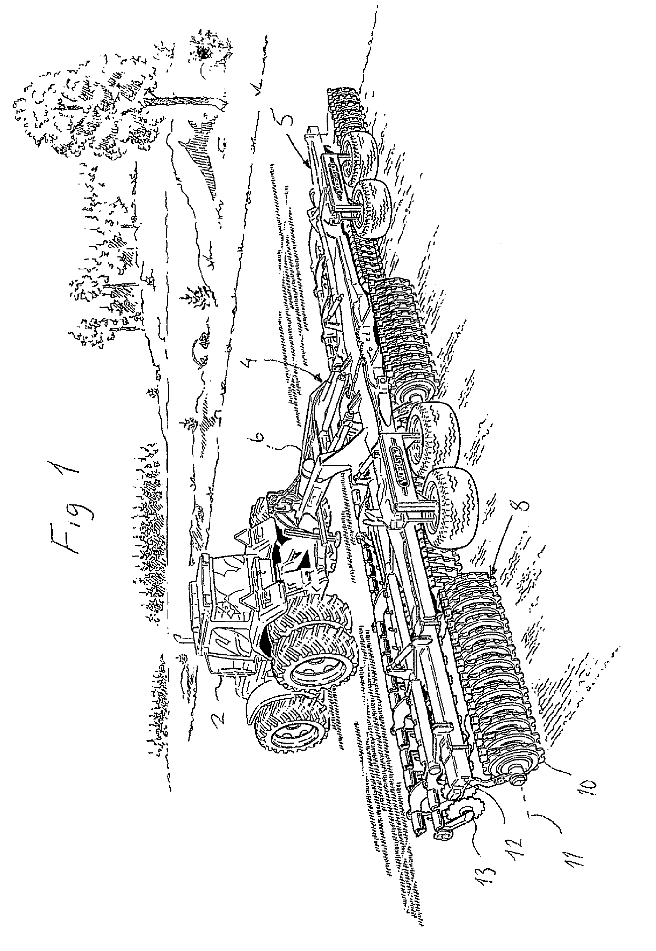

Figure 1 shows an agricultural implement 4 drawn by a tractor 2. The agricultural implement 4 comprises a frame 5 and a towing device 6. At the frame 5 are a number of roller packages 8 with a plurality of roller wheels 10 arranged around a common axle 11. The roller package 8 is journalled in bearings at one or a plurality of frame beams 12. The agricultural implement 4 here also comprises soil tilling tools 13 in the form of discs.

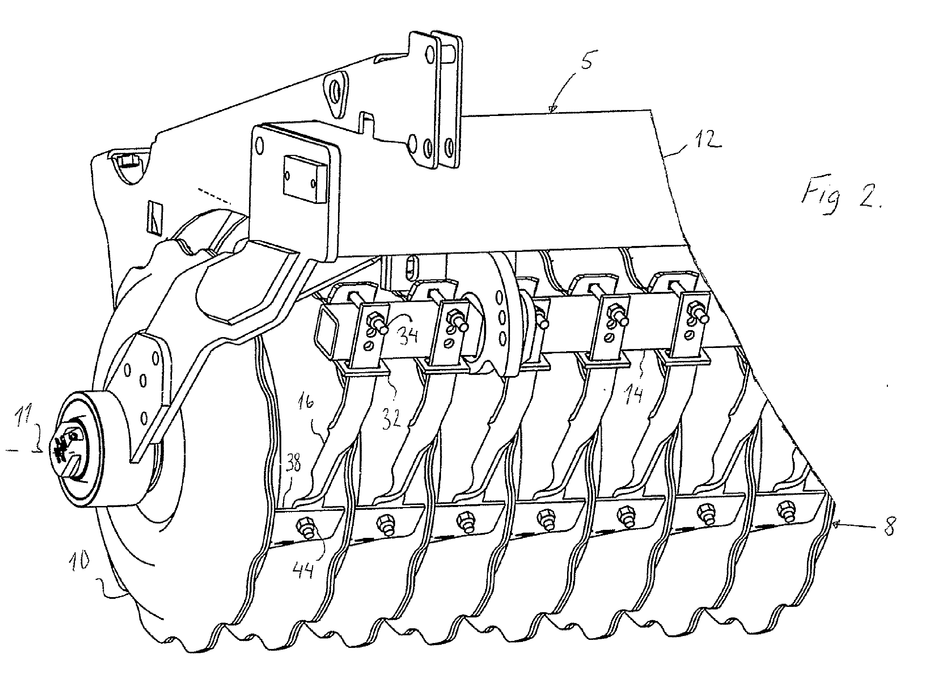

Parts of the left-hand roller package are shown in Figure 2. A carrying beam 14 is turnably journalled in bearings at the frame 5. At the carrying beam 14 a number of scrapers 16 are fastened. The scrapers 16 comprise a work tool 38 arranged close to two neighbouring roller wheels 10 with the object of removing soil, stones or plant parts that have adhered to any of these wheels 10.

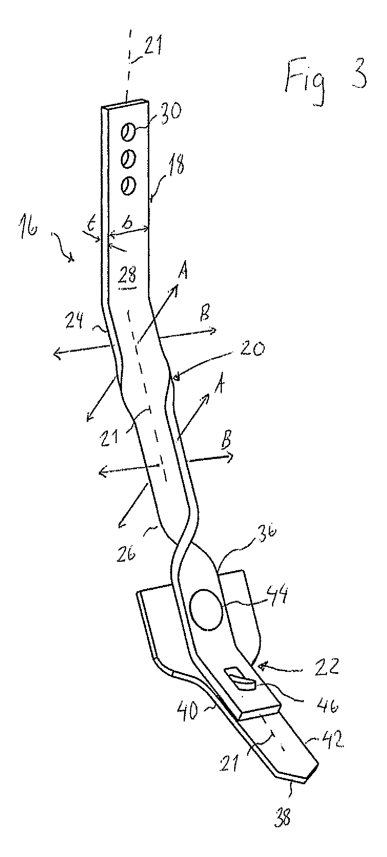

Figure 3 shows a scraper 16. It comprises as essential parts a fastening portion 18, a middle portion 20 and an end portion 22. The fastening portion 18 is designed with a number of holes 30 and can be fastened to the carrying beam 14 with the help of a clamp 32 and a screw connection 34 through one of the holes 30 (see Fig. 2).

The end portion 22 comprises a fastening part 36 at which the work tool 38 is removably arranged with the help of a screw connection 44 and a locking flange 46.

The end portion 22 is connected with a middle portion 20. The middle portion comprises a first part 24 flexible in a first direction A and mainly rigid in a second direction B essentially perpendicular to the first direction A. The middle portion 20 also comprises a second part 26 flexible in the second direction B and mainly rigid in the first direction A. The first part 24 of the middle portion is connected to the fastening portion 18 and its second part 26 is connected to the end portion 22.

According to the preferred embodiment in Figure 3 the fastening portion 18, the middle portion 20 and the fastening part 36 of the end portion 22 are comprised of an elongated plate part with width *b* and thickness *t* where the width *b* is approx. 5 times greater than the thickness t. The plate part has thereby a broad side or surface 28. At the middle portion 20 the plate part is turned essentially 90° around an elongated centre curve or line 21. The normal direction of the broad surface 28 of the first part 24 hereby lies in essentially the same plane as the first direction A and the centre curve 21 and essentially perpendicular to the normal direction of the broad surface 28 of the second part 26. The fastening part 36 is then in the same way turned essentially 90° around the centre curve 21 relative to the second part 26 of the middle portion 20. The centre curve 21 becomes in this case not a completely straight line since the plate part is bowed at the first part of the middle portion 24 and the fastening part 36.

Mounted on the agricultural implement the normal direction of the broad surface 28 of the first part 24 is thereby essentially perpendicular to the axle 11 of the roller package 8 while the normal direction of the broad surface 28 of the second part 26 is essentially parallel with the axle 11.

Hereby the first part 24 of the middle portion is allowed to recoil in the radial direction A of the roller wheels 10 and the second part 26 in the axial direction B of the roller wheels 10. The scraper 16 has thereby good potential to follow the contours of the roller wheels even when it is subjected to wear and vibrations.

The second part 26 of the middle portion 20 has also in this way little extension in the direction of the roller package axle which gives good throughflow of soil, stones and plant parts during reversing of the implement. These otherwise risk adhering between the scraper 16 and the roller wheels 10. The different holes 30 of the fastening portion 18 for the screw connection 34 and the turnable journalling of the carrying axle 14 at the frame 5 allow the position of the scraper relative to the roller wheels 10 to be adjusted as the wheels 10 and the scraper 16 become worn.

The above-described embodiment is not limiting for the invention which can be varied in a plurality of ways within the frame of the patent claims. Accordingly the plate part can for example be completely or partly replaced by other components with a different design but in the main similar properties. Furthermore the work tool can be integrated with the plate part or designed/fastened on in a different way.

The solution with the plate part is favourable as regards simplicity, robustness, materials and manufacturing costs. The dimensions of the plate part can be varied but the width should be at least three times greater than the thickness.

## Claims

1. Scraper for agricultural implements comprising a fastening portion (18) and an end portion (22) connected with a middle portion (20) comprising a first part (24) flexible in a first direction (A) and mainly rigid in a second direction (B) essentially perpendicular to the first direction (A) and a second part (26) flexible in the second direction (B) and mainly rigid in the first direction (A), and where the end portion (22) comprises a work tool (3 8).

2. Scraper according to Claim 1, wherein the work tool (38) is comprised of a removable part of the end portion (22).

3. Scraper according to any one of the preceding claims, wherein the middle portion (20) is comprised of an elongated plate part with a width (b) at least three times greater than its thickness (t), where the second part (26) is turned essentially 90° relative to the first part (24) around an essentially elongated centre curve (21).

4. Scraper according to Claim 3, wherein the middle portion (20) and at least parts of the fastening portion (18) and the end portion (22) are comprised of an elongated plate part.

5. Agricultural implement comprising at least one roller package (8) in its turn comprising a plurality of roller wheels (10) arranged at a common axle (11), at least one carrying beam (14) essentially parallel with the axle (11), at least one scraper according to any one of the preceding claims fastened at the carrying beam (14), which scraper is arranged with the work tool (38) near two neighbouring roller wheels (10) with the aim of removing soil, stones or plant parts that have adhered to any of these wheels (10).

6. Agricultural implement according to Claim 5 with a scraper according to either Claim 3 or 4 where the middle portion (20) has a broad surface (28), where the normal direction of the broad surface (28) of the first part (24) is essentially perpendicular to the axle (11) and the normal direction of the broad surface (28) of the second part (26) is essentially parallel with the axle (11).

7. Agricultural implement according to Claim 6 wherein the first part (24) of the middle portion is connected to the fastening portion (18) and the second part (26) of the middle portion is connected to the end portion (22).
